# FASCICULE DE BREVET EUROPEEN

(11) **EP 0 765 624 B1**
(45) Date de publication et mention de la délivrance du brevet: **24.02.1999**
(21) Numéro de dépôt: 96115328.5
(22) Date de dépôt: 24.09.1996
(51) Int. Cl.: A47J 37/08

(54) **Perfectionnement aux grille-pain equipés d'un dispositif de réchauffage de croissants ou aliments analogues**
Verbesserung zu Toasters die mit einer Wärmevorrichtung für Croissants oder dergleiche Nahrungsmittel
Improvement for toasters equipped with a warming device for croissants or similar food articles

(30) Priorité: 27.09.1995 FR 9511643
(43) Date de publication de la demande: 02.04.1997
(73) Titulaire: MOULINEX S.A., 75008 Paris (FR)
(72) Inventeur: Arnedo, Julian, 08031 Barcelone (ES); Basora, Sanjuan Antonio, 08028 Barcelone (ES)
(74) Mandataire: Busquets, Jean-Pierre

(56) Documents cités:
- EP-A- 0 314 826
- DE-C- 4 427 053
- DE-U- 9 010 017
- DE-U- 9 412 263

## Description

La présente invention se rapporte à un grille-pain équipé d'un dispositif de réchauffage de croissants ou aliments analogues, tels qu'en particulier des petits pains, et comportant un boîtier comprenant au moins une chambre de grillage verticale qui s'ouvre vers l'extérieur dans la paroi supérieure du boîtier.

Elle concerne, plus précisément, un tel grille-pain dont le dispositif de réchauffage comprend deux supports disposés symétriquement par rapport au plan longitudinal médian de l'ouverture et montés pivotants sur la paroi supérieure du boîtier autour d'un axe parallèle audit plan longitudinal de l'ouverture au moyen d'un mécanisme de manoeuvre actionné par un organe de commande manuelle susceptible de passer d'une position arrêt à une position marche et inversement, lesdits supports pouvant prendre soit une position de réchauffage en laquelle ils sont amenés par manoeuvre de l'organe de commande depuis sa position arrêt jusqu'à sa position marche et pour laquelle ils sont surélevés par rapport à la paroi supérieure du boîtier de manière à maintenir les croissants au-dessus de l'ouverture, soit une position escamotée en laquelle ils sont amenés par manoeuvre de l'organe de commande depuis sa position marche jusqu'à sa position arrêt et pour laquelle ils sont descendus à proximité de la paroi supérieure du boîtier.

Un grille-pain équipé d'un tel dispositif de réchauffage de croissants est connu du document EP-A-314 826. En position de réchauffage, les croissants sont maintenus au-dessus de l'ouverture de la chambre de grillage à légère distance de la paroi supérieure du boîtier et sont chauffés grâce à la chaleur montant de la chambre de grillage. Le dispositif de réchauffage est en position escamotée lorsque le grille-pain est utilisé normalement pour griller du pain à l'intérieur de la chambre de grillage.

D'après ce document EP-A-314 826, les deux supports du dispositif de réchauffage sont constitués chacun par des fils métalliques en forme de U qui sont amenés par pivotement d'une position à une autre au moyen d'un mécanisme de manoeuvre, lequel comprend plusieurs bras qui sont formés à partir de l'extrémité libre de l'une des branches du U de chaque support, et qui sont recourbés plusieurs fois d'une manière différente et en interaction d'un support à l'autre, ainsi qu'un bras supplémentaire formant un levier lié à un bouton rotatif de commande et associé à un bras de l'un des supports de manière que par suite d'une rotation du bouton, le levier actionne le support associé lui-même agissant sur l'autre support afin d'obtenir le pivotement des deux supports pour les faire passer de la position escamotée à la position de réchauffage. Toutefois, par la conformation même des deux supports, ce mécanisme de manoeuvre est d'une réalisation compliquée ; de plus, en position de réchauffage, les différents bras du mécanisme de manoeuvre sont à proximité de la chaleur de la chambre de grillage, risquant dès lors, par suite d'échauffements répétés, de devenir instables et retomber sur la paroi supérieure du boîtier, rendant désormais inopérant le dispositif de réchauffage.

L'invention se propose, par suite, de perfectionner ce type de dispositif de réchauffage équipant un grille-pain, qui soit toujours fiable dans le temps et reste adapté à la fabrication en grande série de ces grille-pain.

Selon l'invention, le mécanisme de manoeuvre comprend deux roues dentées rotatives engrenant l'une avec l'autre, respectivement de type menant et mené, montées dans le boîtier, calées sur deux arbres horizontaux, et liées en rotation respectivement à deux bagues circulaires de fixation respective des deux supports, la roue dentée menante étant actionnée par l'organe de commande manuelle, le boîtier comporte des moyens aptes à immobiliser l'une des deux roues dentées uniquement lorsque l'organe de commande manuelle occupe sa position marche ou sa position arrêt, ces moyens d'immobilisation comprenant un bossage formant un point dur qui est ménagé sur une lame horizontale montée dans le boîtier en dessous de l'une des deux bagues et qui vient s'engager successivement dans deux échancrures pratiquées sur le pourtour de la bague correspondante et associées respectivement aux positions marche et arrêt de l'organe de commande manuelle.

Ainsi, en utilisant un mécanisme de manoeuvre qui fait simplement intervenir un engrenage de deux roues dentées, mais qui risque en soi de se détériorer en raison de la friction réciproque des deux roues, la lame pourvue du bossage en engagement successif dans les deux échancrures de la bague liée à l'une des deux roues, procure une immobilisation efficace de l'engrenage selon la position marche ou arrêt de l'organe de commande manuelle, et partant, assure dans le temps une grande stabilité des deux supports, que ceux-ci soient en position de réchauffage ou en position escamotée, et surtout, constitue en soi une pièce particulièrement simple, peu onéreuse, occupant un minimum d'espace dans le boîtier et parfaitement adaptée à la fabrication en grande série.

Les caractéristiques et avantages de l'invention ressortiront d'ailleurs de la description qui va suivre, à titre d'exemple non limitatif, en référence aux dessins annexés dans lesquels :
- la figure 1 est une vue schématique partielle en perspective d'un grille-pain illustrant un dispositif de réchauffage selon l'invention en position de réchauffage ;
- la figure 2 est une vue analogue à la figure 1 illustrant le dispositif de réchauffage en position escamotée ;
- la figure 3 est une vue schématique partielle en perspective d'un mécanisme de manoeuvre du dispositif de réchauffage montré en position escamotée ;
- la figure 4 est une vue en perspective d'un ensemble bague-lame à bossage du mécanisme de manoeuvre de la figure 3 ; et
- les figures 5 et 6 sont des vues schématiques en coupe longitudinale de l'ensemble bague-lame à bossage de la figure 4, lorsqu'une manette de commande du dispositif de réchauffage est en position arrêt (figure 5) et en position marche (figure 6).

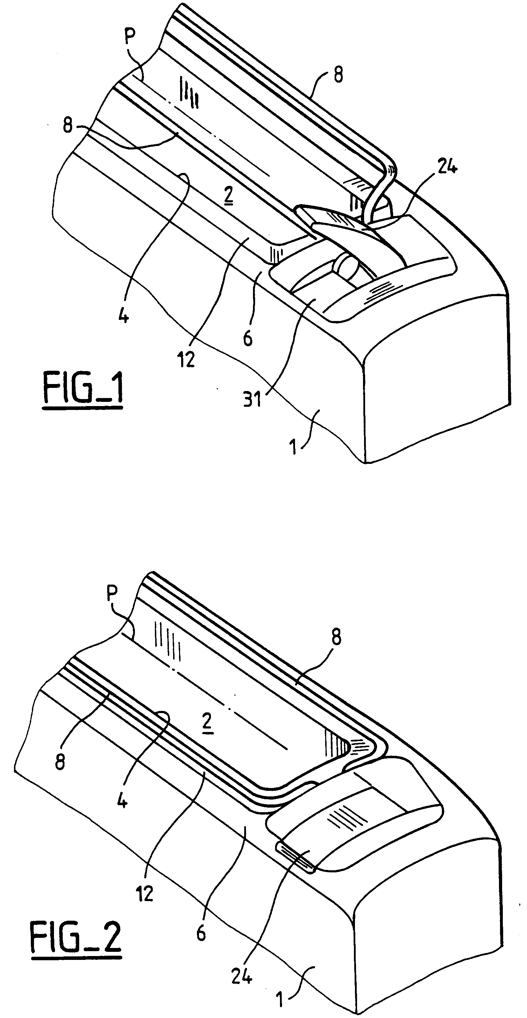

Le grille-pain représenté schématiquement aux figures 1 et 2 comporte un boîtier 1 et au moins une chambre ou enceinte de grillage 2 qui s'ouvre vers l'extérieur par une ouverture 4 pratiquée dans la paroi supérieure 6 du boîtier 1.

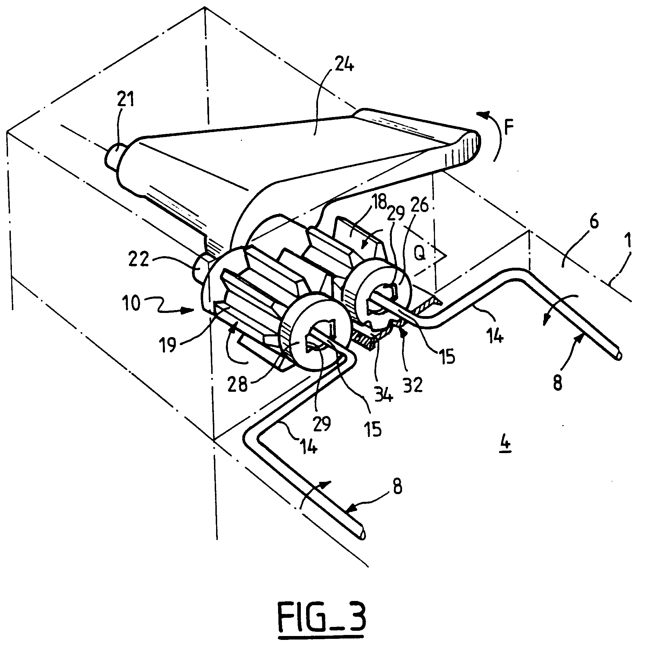

Le grille-pain est équipé d'un dispositif de réchauffage de croissants ou aliments analogues, par exemple des petits pains, qui comprend deux supports 8 disposés symétriquement par rapport au plan longitudinal médian P de l'ouverture 4 et montés pivotants sur la paroi supérieure 6 du boîtier 1 au moyen d'un mécanisme de manoeuvre, désigné par la référence générale 10 sur la figure 3 et que l'on décrira en détail par la suite, de manière à pouvoir prendre soit une position de réchauffage (figure 1) pour laquelle ils sont surélevés par rapport à la paroi supérieure 6 du boîtier afin de maintenir les croissants au-dessus de l'ouverture 4, soit une position escamotée (figure 2) pour laquelle ils sont descendus à proximité de la paroi supérieure 6 du boîtier.

Dans la position de réchauffage, les croissants sont chauffés par la chaleur montant de la chambre de grillage 2, elle-même chauffée par au moins une résistance électrique (non représentée). Dans la position escamotée, on ne peut plus réchauffer les croissants, le grille-pain pouvant alors être utilisé normalement.

Dans l'exemple de réalisation illustré aux figures 1 et 2, les deux supports 8 sont constitués par des fils métalliques, en forme de U, qui entourent un rebord 12 de la paroi supérieure 6 du boîtier 1 disposé sur le pourtour de l'ouverture 4. Chaque support 8 est monté pivotant, au moyen de deux bras transversaux 14 (figure 3) formés par les branches du U, autour d'un axe parallèle audit plan longitudinal P de l'ouverture 4, les extrémités 15 (figure 3) desdits bras 14 étant recourbées de manière à être rendues solidaires du mécanisme de manoeuvre 10, voir figure 3.

Comme le montre la figure 3, le mécanisme de manoeuvre 10 des deux supports 8 est du type à engrenage et comprend deux roues dentées rotatives 18 et 19 engrenant l'une avec l'autre, respectivement dites menante et menée, montées dans le boîtier 1 en étant calées respectivement sur deux arbres horizontaux 21 et 22 s'étendant dans un plan Q parallèle au plan longitudinal P de l'ouverture 4, et dont la roue dentée menante 18 est actionnée directement par un organe de commande manuelle 24 accessible de l'extérieur du boîtier 1. Du côté de l'ouverture 4, figure 3, les deux roues dentées 18 et 19 sont liées en rotation respectivement à deux bagues circulaires 26 et 28 réalisées en une matière plastique telle qu'un polyamide et pourvues chacune d'un orifice 29 dans lequel est fixée par sertissage l'extrémité correspondante 15 du bras 14 du support 8.

Dans cet exemple, l'organe de commande manuelle 24 est constitué par une manette montée pivotante dans une dépression 31, visible à la figure 1, pratiquée dans la paroi supérieure 6 du boîtier 1, autour d'un axe de pivotement constitué par l'axe de rotation 21 de la roue dentée menante 18, voir figure 3. La manette d'actionnement 24 est susceptible de passer par pivotement d'une position arrêt à une position marche (figure 1) dans laquelle le mécanisme de manoeuvre 10 amène les deux supports 8 dans leur position de réchauffage (figure 1), et inversement, d'une position marche à une position arrêt (figure 2) dans laquelle le mécanisme de manoeuvre 10 amène les deux supports 8 dans leur position escamotée (figure 2).

Selon l'invention, le boîtier 1 comporte des moyens, notés 32 sur la figure 3, aptes à immobiliser l'une des deux roues dentées, en l'occurrence la roue dentée menante 18, uniquement lorsque la manette d'actionnement 24 occupe sa position marche ou sa position arrêt.

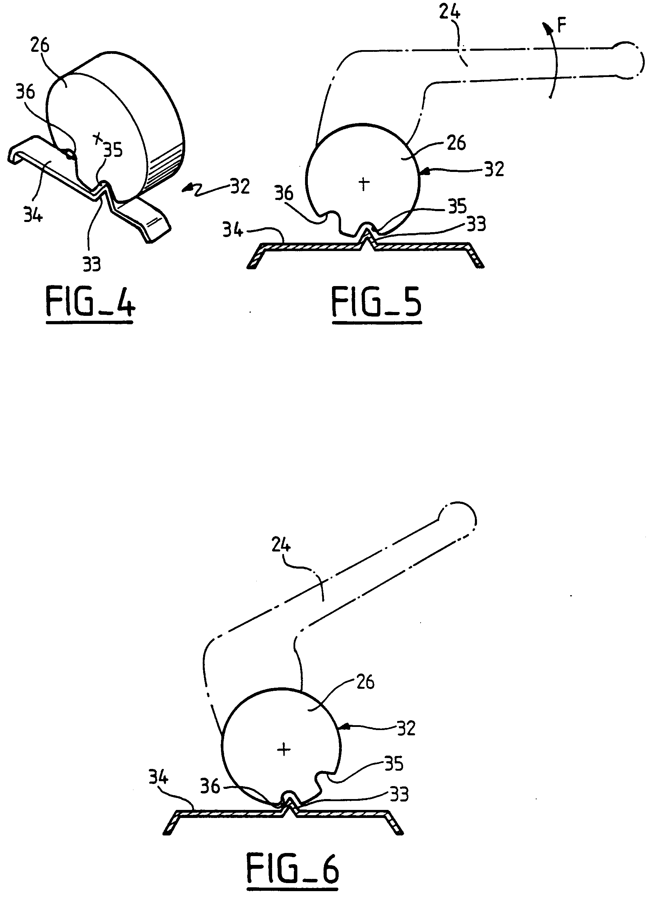

En regard des figures 3 à 6, ces moyens d'immobilisation 32 comportent présentement un bossage 33 formant un point dur qui est ménagé sur une petite lame rectangulaire 34 montée horizontalement dans le boîtier 1 en y étant fixée par ses extrémités par tout moyen de fixation approprié (non représenté) et en étant placée en dessous de la bague 26 solidaire de la roue dentée menante 18, comme visible à la figure 3, et qui vient s'engager successivement dans deux échancrures ou cavités 35 et 36 pratiquées sur le pourtour de la bague 26 et dont l'une 35 correspond à la position arrêt de la manette 24 (voir figure 5), tandis que l'autre 36 correspond à la position marche de ladite manette 24 (voir figure 6). Les extrémités de la lame 34 sont pliées vers la paroi supérieure 6 du boîtier de manière à ménager un espace entre ladite lame 34 et cette paroi, rendant ainsi élastique la lame 34.

De préférence, la lame élastique 34 est réalisée en un matériau métallique, par exemple en acier inoxydable, et le bossage 33 s'étend transversalement à la lame 34, sur toute la largeur de celle-ci, et vient d'emboutissage avec ladite lame 34. De plus, le bossage 33 est adapté à produire un bruit sec audible par l'utilisateur lors de son engagement par encliquetage élastique dans l'une ou l'autre des deux échancrures 35 et 36 de la bague 26 selon la position marche ou arrêt de la manette d'actionnement 24.

Ainsi l'utilisation du dispositif de réchauffage selon l'invention par mise en oeuvre de son mécanisme de manoeuvre est très simple. Les supports 8 sont à l'origine dans leur position escamotée (figures 2 et 3), c'est-à-dire à proximité de la paroi supérieure 6 du boîtier 1, les supports 8 étant disposés dans un plan parallèle à la paroi supérieure 6 et la manette d'actionnement 24 étant en position arrêt, illustrée aux figures 3 et 5, dans laquelle le bossage 33 formant point dur de la lame élastique 34 est engagé dans l'échancrure 35 de la bague 26 (voir figure 5) solidaire de la roue dentée menante 18. L'utilisateur actionne la manette 24 selon un mouvement de pivotement indiqué par la flèche F sur les figures 3 et 5, et au cours duquel les deux roues dentées 18 et 19 tournent (la roue dentée menante 18 tournant dans le sens de la flèche F) en provoquant un désengagement du bossage 33 hors de l'échancrure 35 de la bague 26, et entraînent les deux supports 8 qui pivotent et se soulèvent jusqu'à leur position de réchauffage pour laquelle la manette 24 vient en position marche telle qu'illustrée aux figures 1 et 6 ; en fin de course de montée de la manette 24, le bossage 33 vient alors s'engager élastiquement dans l'autre échancrure 36 de la bague 26, comme illustré à la figure 6, en produisant un claquement sec, immobilisant ainsi la roue dentée menante 18 de manière à obtenir un maintien stable des supports 8 en position de réchauffage.

Grâce à l'élasticité de la lame 34 et donc de l'engagement élastique du bossage 33 dans l'échancrure 36 de la bague 26, on comprendra que dans l'éventualité d'une action brutale de l'utilisateur directement sur les supports 8 en position de réchauffage au lieu d'une action sur la manette 24, le mécanisme d'entraînement des deux roues dentées 18 et 19 ne sera pas forcé, donc détérioré.

Pour repasser dans la position escamotée, la manette 24 étant en position marche, illustrée aux figures 1 et 6, l'utilisateur actionne la manette 24 en sens inverse et les deux roues dentées 18 et 19 provoquent alors un désengagement du bossage 33 hors de l'échancrure 36 de la bague 26 et entraînent les deux supports 8 qui pivotent et redescendent jusqu'à proximité de la paroi supérieure 6 du boîtier 1, la manette 24 venant en position arrêt telle qu'illustrée aux figures 2 et 5 ; en fin de course de descente de la manette 24, le bossage 33 revient s'engager élastiquement dans l'échancrure 35 de la bague 26, comme illustré à la figure 5, en produisant également un claquement sec, immobilisant ainsi la roue dentée menante 18 de manière à obtenir un maintien stable des supports 8 en position escamotée.

## Revendications

1. Grille-pain équipé d'un dispositif de réchauffage de croissants ou aliments analogues et comportant un boîtier (1) comprenant au moins une chambre de grillage verticale (2) qui s'ouvre vers l'extérieur dans la paroi supérieure (6) du boîtier, ledit dispositif de réchauffage comprenant deux supports (8) disposés symétriquement par rapport au plan longitudinal médian (P) de l'ouverture (4) et montés pivotants sur la paroi supérieure (6) du boîtier (1) autour d'un axe parallèle audit plan longitudinal de l'ouverture (4) au moyen d'un mécanisme de manoeuvre (10) actionné par un organe de commande manuelle (24) susceptible de passer d'une position arrêt à une position marche et inversement, lesdits supports (8) pouvant prendre soit une position de réchauffage en laquelle ils sont amenés par manoeuvre de l'organe de commande (24) depuis sa position arrêt jusqu'à sa position marche et pour laquelle ils sont surélevés par rapport à la paroi supérieure (6) du boîtier (1) de manière à maintenir les croissants au-dessus de l'ouverture (4), soit une position escamotée en laquelle ils sont amenés par manoeuvre de l'organe de commande (24) depuis sa position marche jusqu'à sa position arrêt et pour laquelle ils sont descendus à proximité de la paroi supérieure (6) du boîtier (1),
**caractérisé en ce que** le mécanisme de manoeuvre (10) comprend deux roues dentées rotatives (18, 19) engrenant l'une avec l'autre, respectivement de type menant et mené, montées dans le boîtier (1), calées sur deux arbres horizontaux (21, 22), et liées en rotation respectivement à deux bagues circulaires (26, 28) de fixation respective des deux supports (8), la roue dentée menante (18) étant actionnée par l'organe de commande manuelle (24), le boîtier (1) comporte des moyens (32) aptes à immobiliser l'une (18 ; 19) des deux roues dentées uniquement lorsque l'organe de commande manuelle (24) occupe sa position marche ou sa position arrêt, ces moyens d'immobilisation (32) comprenant un bossage (33) formant un point dur qui est ménagé sur une lame horizontale (34) montée dans le boîtier en dessous de l'une (26) des deux bagues et qui vient s'engager successivement dans deux échancrures (35, 36) pratiquées sur le pourtour de la bague correspondante (26) et associées respectivement aux positions marche et arrêt de l'organe de commande manuelle (24).

2. Grille-pain selon la revendication 1,
**caractérisé en ce que** la lame (34) pourvue du bossage (33) est une lame élastique réalisée en un matériau métallique, ledit bossage (33) s'engageant par encliquetage élastique dans l'une (36) ou l'autre (35) des échancrures de la bague (26) selon la position marche ou arrêt de l'organe de commande manuelle (24).

3. Grille-pain selon la revendication 2,
**caractérisé en ce que** le bossage (33) est adapté à produire un bruit sec audible par l'utilisateur lors de son engagement dans l'une (35) ou l'autre (36) des échancrures de la bague (26).

4. Grille-pain selon la revendication 2 ou 3,
**caractérisé en ce que** le bossage (33) s'étend transversalement à la lame (34) et vient d'emboutissage avec ladite lame (34).

5. Grille-pain selon l'une quelconque des revendications précédentes,
**caractérisé en ce que** l'organe de commande manuelle (24) est constitué par une manette montée pivotante dans une dépression (31) pratiquée dans la paroi supérieure (6) du boîtier (1) et dont l'axe de pivotement constitue l'axe de rotation de la roue dentée menante (18).

## Claims

1. Toaster equipped with a device for reheating croissants or similar food and having a casing (1) comprising at least one vertical toasting chamber (2) which opens towards the outside in the top wall (6) of the casing, said reheating device comprising two supports (8) disposed symmetrically with respect to the longitudinal median plane (P) of the opening (4) and pivotally mounted on the top wall (6) of the casing (1) about an axis parallel to said longitudinal plane of the opening (4) by means of an operating mechanism (10) actuated by a manual control device (24) able to pass from an off position to an on position and vice versa, said supports (8) being able to have either a reheating position into which they are brought by operating the control device (24) from its off position to its on position and in which they are raised with respect to the top wall (6) of the casing (1) so as to hold the croissants above the opening (4), or a retracted position into which they are brought by operating the control device (24) from the on position to its off position and in which they are lowered close to the top wall (6) of the casing (1),
**characterised in that** the operating mechanism (10) comprises two rotary toothed wheels (18, 19) meshing with each other, respectively of the driving and driven type, mounted in the casing (1), fixed to two horizontal shafts (21, 22), and rotatably connected respectively to two respective circular fixing rings (26, 28) for the two supports (8), the driving toothed wheel (18) being actuated by the manual control device (24), the casing (1) has means (32) suitable for immobilising one (18; 19) of the two toothed wheels only when the manual control device (24) occupies its on position or its off position, these immobilisation means (32) comprising a protrusion (33) forming a hard spot which is formed on a horizontal blade (34) mounted in the casing below one (26) of the two rings and which comes to be engaged successively in two scallops (35, 36) formed on the periphery of the corresponding ring (26) and associated respectively with the on and off positions of the manual control device (24).

2. Toaster according to claim 1,
**characterised in that** the blade (34) provided with the protrusion (33) is an elastic blade produced from a metallic material, said protrusion (33) engaging by elastic snapping into one (36) or other (35) of the scallops in the ring (26) according to the on or off position of the manual control device (24).

3. Toaster according to claim 2,
**characterised in that** the protrusion (33) is adapted to produce a sharp noise audible to the user when it engages in one (35) or other (36) of the scallops in the ring (26).

4. Toaster according to claim 2 or 3,
**characterised in that** the protrusion (33) extends transversely to the blade (34) and is made by pressing with said blade (34).

5. Toaster according to any one of the preceding claims,
**characterised in that** the manual control device (24) consists of a handle pivotally mounted in a hollow (31) formed in the top wall (6) of the casing (1) and whose pivot axis constitutes the rotation axis of the driving toothed wheel (18).

## Patentansprüche

1. Toaster, der mit einer Einrichtung zum Aufwärmen von Croissants oder entsprechenden Nahrungsmitteln ausgestattet ist und ein Gehäuse (1) mit Wenigstens einer vertikalen Röstkammer (2) aufweist, die sich nach außen in die obere Wand (6) des Gehäuses öffnet, wobei die Aufwärmeinrichtung zwei Träger (8) aufweist, die symmetrisch zur mittleren Längsebene (P) der Öffnung (4) angeordnet und mittels eines Handhabungsmechanismus (10), der von einem manuellen Steuerorgan (24) betätigt wird, das von einer Aus-Position in eine Ein-Position und umgekehrt übergehen kann, an der oberen Wand (6) des Gehäuses (1) um eine zu der Längsebene der Öffnung (4) parallele Achse schwenkbar angebracht sind, wobei die Träger (8) entweder eine Aufwärmposition einnehmen können, in die sie durch Handhabung des Steuerorgans (24) aus seiner Aus-Position in seine Ein-Position gebracht werden und in der sie bezüglich der oberen Wand (6) des Gehäuses (1) derart hochstehen, daß die Croissants über der Öffnung (4) gehalten werden, oder eine weggeklappte Position einnehmen können, in die sie durch Handhabung des Steuerorgans (24) aus seiner Ein-Position in seine Aus-Position gebracht sind und in der sie in die Nähe der oberen Wand (6) des Gehäuses (1) abgesenkt sind,
**dadurch gekennzeichnet, daß** der Handhabungsmechanismus (10) zwei Zahnräder (18, 19) aufweist, die ineinandergreifen, vom Typ eines getriebenen bzw. treibenden Rades sind, in dem Gehäuse (1) angebracht sind, an zwei horizontalen Wellen (21, 22) verkeilt sind, und drehfest mit zwei Kreisringen (26, 28) zur jeweiligen Befestigung der beiden Träger (8) verbunden sind, wobei das treibende Zahnrad (18) von dem manuellen Steuerorgan (24) betätigt wird, das Gehäuse (1) Mittel (32) aufweist, die zur Fixierung eines (18; 19) der beiden Zahnräder nur dann geeignet sind, wenn das manuelle Steuerorgan (24) seine Ein- oder seine Aus-Position einnimmt, wobei diese Fixierungsmittel (32) eine Erhebung (33) aufweisen, die eine harte Stelle auf einer horizontalen Lamelle (34) bildet, die in dem Gehäuse unter einem (26) der beiden Ringe angebracht ist und nacheinander mit zwei bogenförmigen Aussparungen (35, 36) in Eingriff gelangt, die am Umfang des entsprechenden Rings (26) vorgesehen und der Ein-Position bzw. der Aus-Position des manuellen Steuerorgans (24) zugeordnet sind.

2. Toaster nach Anspruch 1,
**dadurch gekennzeichnet, daß** die mit der Erhebung (33) versehene Lamelle (34) eine elastische, aus einem Metallmaterial hergestellte Lamelle ist, wobei die Erhebung (33) durch elastisches Einklicken je nach der Ein- oder Aus-Position des manuellen Steuerorgans (24) in die eine (36) oder die andere (35) der beiden bogenförmigen Aussparungen des Rings (26) in Eingriff gelangt.

3. Toaster nach Anspruch 2,
**dadurch gekennzeichnet, daß** die Erhebung (33) ein vom Benutzer hörbares trockenes Geräusch erzeugen kann, wenn sie in die eine (35) oder die andere (36) der beiden bogenförmigen Aussparungen des Rings (26) in Eingriff gelangt.

4. Toaster nach Anspruch 2 oder 3,
**dadurch gekennzeichnet, daß** sich die Erhebung (33) quer zu der Lamelle (34) erstreckt und aus dem Tiefziehen mit der Lamelle (34) kommt.

5. Toaster nach einem der vorhergehenden Ansprüche,
**dadurch gekennzeichnet, daß** das manuelle Steuerorgan (24) durch einen Griff gebildet ist, der in einer Vertiefung (31) schwenkbar angebracht ist, die in der oberen Wand (6) des Gehäuses (1) vorgesehen ist, und dessen Schwenkachse die Drehachse des treibenden Zahnrades (18) bildet.
